(19) Europäisches Patentamt
European Patent Office
Office européen des brevets

(11) EP 3 621 746 B1

(12) EUROPÄISCHE PATENTSCHRIFT

(45) Veröffentlichungstag und Bekanntmachung des Hinweises auf die Patenterteilung:
09.06.2021 Patentblatt 2021/23

(21) Anmeldenummer: 18721352.5

(22) Anmeldetag: 27.04.2018

(51) Int Cl.:
B05B 1/08 (2006.01)     B05B 12/04 (2006.01)
B05B 9/047 (2006.01)     B05B 13/04 (2006.01)

(86) Internationale Anmeldenummer:
PCT/EP2018/060824

(87) Internationale Veröffentlichungsnummer:
WO 2018/206309 (15.11.2018 Gazette 2018/46)

(54) **APPLIKATIONSGERÄT ZUM BESCHICHTEN VON BAUTEILEN MIT EINEM BESCHICHTUNGSMITTEL**

APPLICATION DEVICE FOR COATING WORKPIECES WITH A COATING PRODUCT

DISPOSITIF D'APPLICATION POUR LE REVÊTEMENT D'ÉLÉMENTS DE CONSTRUCTION AVEC UN PRODUIT DE REVÊTEMENT

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 12.05.2017 DE 102017110316

(43) Veröffentlichungstag der Anmeldung:
18.03.2020 Patentblatt 2020/12

(73) Patentinhaber: ABB Schweiz AG
5400 Baden (CH)

(72) Erfinder: BÖRNER, Gunter
74889 Sinsheim (DE)

(74) Vertreter: Wesch, Arno
Reble & Klose
Rechts- und Patentanwälte
Konrad-Zuse-Ring 32
68163 Mannheim (DE)

(56) Entgegenhaltungen:
WO-A1-2010/107445     FR-A1- 2 990 421
US-A- 5 741 554

**Beschreibung**

Die Erfindung betrifft ein Applikationsgerät zum Beschichten von Bauteilen mit einem Beschichtungsmittel gemäß Anspruch 1. Ein solches Applikationsgerät umfasst einen Druckkopf mit mehreren Düsen, aus denen das Beschichtungsmittel ausstoßbar ist, wobei an jeder einzelnen Düse ein Düsenventil angebracht ist, das eine Ventilöffnungszeit lang offenbar ist, um das Beschichtungsmittel aus der jeweiligen Düse auszustoßen, und wobei jedem Düsenventil jeweils eine Düsenventilzuleitung zugeordnet ist, welche an ihrer Auslassöffnung das Beschichtungsmittel dem jeweiligen Düsenventil zuführt.

Aus der WO 2010/107 445 A1 ist bereits ein Applikationsgerät dieser Art bekannt. Bei diesem Applikationsgerät ist zwischen zwei Kammern ein flexibles Diaphragma angeordnet. Die US 5,741,554 A offenbart ein Verfahren, bei dem die Öffnungs- und Schließzeit eines Ventils angepasst wird, um Tropfen einer gewünschten Größe zu erhalten. Vor diesem Hintergrund offenbart die DE 10 2017 101 937.5 ein Applikationsgerät, welches mehrere parallel angeordnete Düsen zum Ausbringen von Beschichtungsmittel aufweist. Jeder Düse ist ein Düsenventil zugeordnet. Ein jeweiliges Düsenventil wird geöffnet, wenn ein Tropfen oder Volumen des Beschichtungsmittels die jeweilige Düse verlassen soll. Das Düsenventil ist während einer definierten Ventilöffnungszeit geöffnet. Nach der Ventilöffnungszeit wird das Düsenventil wieder geschlossen.

Das Beschichtungsmittel kann mit einer Pumpe, insbesondere einer Zahnradpumpe, über eine zentrale Beschichtungsmittelzuleitung in das Applikationsgerät gefördert und dort gleichmäßig auf die Düsen verteilt werden. Hierbei wird innerhalb des Applikationsgeräts ein Druck aufgebaut, der auf die Düsenventile wirkt, wenn diese geschlossen sind. Der Druck kann sich an einer Düse unter Ausbringung eines Volumens des Beschichtungsmittels abbauen, wenn ein Düsenventil geöffnet wird.

Obwohl auf alle Düsen ein einheitlicher Ausbringdruck wirkt, kann es während einer ebenfalls einheitlichen Ventilöffnungszeit an unterschiedlichen Düsen zu unterschiedlichen austretenden Volumina an Beschichtungsmittel und damit zu unterschiedlichen Tropfengrößen an unterschiedlichen Düsen kommen.

Bei einer Anordnung mit einer Vielzahl von parallel angeordneten Düsen ist nämlich problematisch, dass bereits kleine Unterschiede der Düsendurchmesser, der Düsenlängen oder weitere Unterschiede der Düsengeometrien oder Düseneigenschaften zu uneinheitlichen austretenden Volumina an unterschiedlichen Düsen führen können.

Dies kann damit zusammen hängen, dass manche Beschichtungsmittel druckabhängige Viskositäten zeigen, nämlich thixotrop sind. Hiermit ist das Problem verbunden, dass eine Dosierung des ausgestoßenen Volumens eines Beschichtungsmittels an einer Düse nicht leicht eingestellt werden kann. Während einer Ventilöffnungszeit kann mehr oder weniger Beschichtungsmittel austreten als man erwarten würde, wenn beispielsweise aufgrund von Unterschieden der Düsengeometrien unvorhergesehene fluiddynamische Effekte auftreten.

Doch auch wenn ein Beschichtungsmittel eine im Wesentlichen druckunabhängige Viskosität zeigt, können Unterschiede in den Düsengeometrien und Düseneigenschaften zu uneinheitlichen oder unvorhersehbaren austretenden Volumina des Beschichtungsmittels an verschiedenen Düsen führen.

Der Erfindung liegt daher die Aufgabe zugrunde, ein Applikationsgerät der eingangs genannten Art so zu verbessern, dass an mehreren parallel angeordneten Düsen des Applikationsgeräts jeweils eine möglichst reproduzierbare und vorhersehbare Austrittsmenge eines Beschichtungsmittels während eines Beschichtungsvorganges auftritt.

Diese Aufgabe wird mit den Merkmalen des Anspruchs 1 gelöst.

Erfindungsgemäß weist jede Düsenventilzuleitung eine Einlassöffnung auf, welche derart verschließbar oder absperrbar ist, dass innerhalb der Düsenventilzuleitung eine definiert dosierte Menge oder ein definiert dosiertes Volumen eines Beschichtungsmittels abgeschlossen aufnehmbar ist.

Erfindungsgemäß ist zunächst erkannt worden, dass jede Düse im Hinblick auf das auszubringende Beschichtungsmittel und die Charakteristika der Düse einzeln berücksichtigt werden muss. Darauf ist erkannt worden, dass dies in besonders einfacher Weise erfolgen kann, wenn innerhalb einer jeweiligen Düsenventilzuleitung eine definiert dosierte Menge eines Beschichtungsmittels isoliert aufgenommen ist und die Düsenventilzuleitung als Speicher fungiert. Ein solcher Speicher kann aufgrund der in ihm herrschenden Druckverhältnisse ein klar definiertes Volumen eines Beschichtungsmittels abgeben, solange die Auslassöffnung mit der Düse fluidleitend verbunden ist. Erfindungsgemäß können die Druckverhältnisse innerhalb jedes individuellen Systems, umfassend ein Düsenventil und eine zugehörige Düsenventilzuleitung, genutzt werden, um einen reproduzierbaren und vorhersehbaren Beschichtungsmittelausstoß aus der jeweiligen Düse zu erzeugen. Erfindungsgemäß ist ein reproduzierbares und vorhersehbares Volumen eines Beschichtungsmittels aus der Düse ausstoßbar, und zwar im Wesentlichen unabhängig von deren technischen Eigenschaften. So ist ein stabiles Produktionsverfahren ermöglicht.

Bevorzugt steht das Beschichtungsmittel innerhalb der Düsenventilzuleitung unter einem Druck, welcher das Volumen des nicht unter Druck oder Umgebungsdruck bzw. Atmosphärendruck stehenden Inneren der Düsenventilzuleitung um ein Ausdehnungsvolumen vergrößert, wobei das Beschichtungsmittel durch Öffnen des Düsenventils unter Druckabbau durch eine Düse ausstoßbar ist und wobei das ausgestoßene Volumen des Beschichtungsmittels dem Ausdehnungsvolumen entspricht. Hierdurch wird sichergestellt, dass ein Tropfen oder Tröpfchen eines Beschichtungsmittels stets das gleiche Volumen, nämlich das Ausdehnungsvolumen, hat.

Gemäß einer vorteilhaften Ausgestaltung der Erfindung wird das Düsenventil während einer Ventilöffnungszeit geöffnet, die größer als die Ausstoßzeit des Beschichtungsmittels ist, die benötigt wird, um den Druck im inneren der Düsenventilzuleitung auf Umgebungsdruck bzw. Atmosphärendruck abzubauen und das Ausdehnungsvolumen an Beschichtungsmittel auszustoßen. Durch geeignete Wahl der Ventilöffnungszeit wird sichergestellt, dass das gesamte Ausdehnungsvolumen vollständig ausgestoßen wurde.

Gemäß einer vorteilhaften Ausgestaltung der Erfindung ist der Einlassöffnung ein Befüllungsventil zugeordnet, welches im geöffneten Zustand ein Eindringen von Beschichtungsmittel in die Düsenventilzuleitung ermöglicht und im geschlossenen Zustand ein Eindringen von Beschichtungsmittel in die Düsenventilzuleitung unterbindet. Hierdurch kann mittels einer Ventilsteuerungseinheit, welche jedes Befüllungsventil einzeln ansteuern kann, in jeder Düsenventilzuleitung ein einheitlicher oder ein für diese und ihr zugehöriges Düsenventil geeigneter Druck aufgebaut werden. So können in den Düsenventilzuleitungen entweder ein einheitlicher Druck oder unterschiedliche Drücke vorherrschen, bevor die jeweiligen Düsenventile zum Beschichtungsmittelausstoß geöffnet werden. Das Öffnen der Düsenventile oder jedes einzelnen Düsenventils kann mit derselben oder einer weiteren Ventilsteuerungseinheit erfolgen.

Gemäß der Erfindung ist die Düsenventilzuleitung elastisch und/ oder reversibel verformbar ausgestaltet. Hierdurch kann die Düsenventilzuleitung hinsichtlich ihres inneren und/ oder äußeren Durchmessers aufgeweitet werden und ein Ausdehnungsvolumen als Zusatzvolumen autweisen. Denkbar ist auch, dass die Düsenventilzuleitung verlängert wird. Die Materialeigenschaften der jeweiligen Düsenventilzuleitung bestimmen die Druckverhältnisse in deren Innerem. Beim Öffnen des jeweiligen Düsenventils wird der Druck oder Überdruck im Inneren der Düsenventilzuleitung aufgrund der Reversibilität ihres Formverhaltens reproduzierbar abgebaut. So wird sichergestellt, dass stets im Wesentlichen das gleiche Volumen an Beschichtungsmittel, nämlich das Ausdehnungsvolumen oder Zusatzvolumen, aus der zugehörigen Düse ausgestoßen wird, auch wenn diese sich hinsichtlich ihres Durchmessers oder anderer Eigenschaften von anderen Düsen unterscheidet.

Gemäß einer weiteren vorteilhaften Ausgestaltung der Erfindung ist die Düsenventilzuleitung als Schlauch oder Rohr ausgebildet. Ein Schlauch oder Rohr ist leicht verarbeitbar. Des Weiteren kann die druckbedingte Formveränderung eines zylindrischen Schlauchs oder Rohrs und damit das Ausdehnungsvolumen relativ leicht rechnerisch ermittelt werden.

Gemäß einer weiteren vorteilhaften Ausgestaltung der Erfindung ist die Düsenventilzuleitung als Schlauch oder Rohr aus einem Kunststoff ausgebildet. Kunststoffe zeigen ein geringes Hystereseverhalten und nehmen nach einem Druckabbau ziemlich exakt ihre Ausgangsform an. Bevorzugt sind Düsenventilzuleitungen aus elastomeren Kunststoffen gefertigt.

Vor diesem Hintergrund ist aber auch denkbar, eine Düsenventilzuleitung aus einem Metall zu fertigen, wenn dieses ein geeignetes Rückstellverhalten in eine Ausgangsform nach dem Druckabbau zeigt.

Gemäß einer weiteren vorteilhaften Ausgestaltung der Erfindung ist der Druckkopf mit einer zentralen Beschichtungsmittelzuleitung verbunden, welche mit allen Befüllungsventilen gemeinsam fluidleitend verbunden oder verbindbar ist. Hierdurch kann das Beschichtungsmittel aus einem Reservoir zentral bis zu einem Befüllungsventil gefördert werden, wobei eine Ventilsteuerungseinheit aber steuert, welches Befüllungsventil zum Aufbau eines geeigneten Drucks innerhalb einer Düsenventilzuleitung und damit zur Dosierung geöffnet wird.

Bevorzugt werden alle Befüllungsventile zugleich geöffnet und in allen Düsenventilzuleitungen der gleiche Druck aufgebaut. Wenn alle Düsenventilzuleitungen identisch ausgebildet sind, wird das Aufnahmevermögen aller Düsenventilzuleitungen jeweils um das gleiche Ausdehnungsvolumen oder Zusatzvolumen vergrößert. So können alle parallel angeordneten Düsen gleich große Tropfen des Beschichtungsmittels ausstoßen.

Gemäß einer weiteren vorteilhaften Ausgestaltung der Erfindung ist die zentrale Beschichtungsmittelzuleitung mit einer Druckregulierungseinheit verbunden. Hierdurch ist leicht einstellbar, dass jede Düsenventilzuleitung mit dem gleichen Druck beaufschlagt wird, wenn nämlich eine Ventilsteuerungseinheit alle Befüllungsventile zugleich öffnet.

Gemäß einer weiteren vorteilhaften Ausgestaltung der Erfindung ist die Druckregulierungseinheit mit einer Luftdruckkontrolleinheit verbunden. Hierdurch ist sichergestellt, dass innerhalb der Düsenventilzuleitungen ein Druck vorherrscht, welcher den Umgebungsdruck oder Atmosphärendruck, nämlich den Luftdruck, in geeigneter Weise übersteigt, so dass ein zuverlässiger Ausstoß von Beschichtungsmittel erfolgt.

Gemäß einer weiteren vorteilhaften Ausgestaltung der Erfindung könnte eine Anordnung einen Roboter umfassen, an welchem ein Applikationsgerät der hier beschriebenen Art aufgenommen ist. Ein Roboter, insbesondere ein Industrieroboter, kann in Lackierstraßen, insbesondere der Automobilindustrie, verwendet werden.

Gemäß einer weiteren vorteilhaften Ausgestaltung der Erfindung weist der Roboter einen um mehrere Achsen schwenkbaren und/ oder beweglichen Roboterarm auf. Alternativ oder zusätzlich ist das Applikationsgerät am Tool Center Point (TCP) des Roboterarms des Roboters aufgenommen. Hierdurch ist das Applikationsgerät leicht in allen Raumrichtungen bewegbar und um eine Vielzahl von Achsen verschwenkbar.

Das hier beschriebene Applikationsgerät kann auch zur Durchführung eines Verfahrens verwendet werden, bei welchem ein druckgesteuerter Ausstoß eines Beschichtungsmittels aus einer Düse solange erfolgt, bis ein Druck abgebaut und mit dem Umgebungsdruck identisch ist. Bevorzugt wird das Applikationsgerät zum digitalen Lackieren bzw. zum Übersprühen verwendet.

In der Zeichnung zeigen

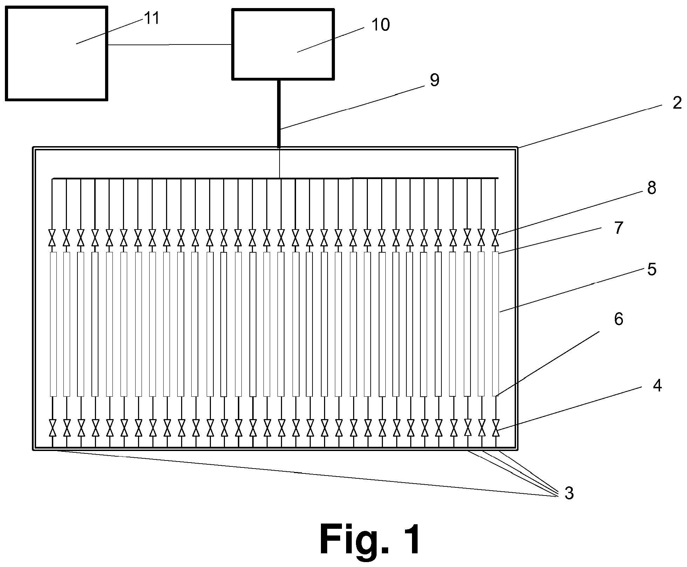

Fig. 1 eine schematische Ansicht eines Applikationsgeräts mit einem Druckkopf mit 32 Düsen, die parallel zueinander angeordnet sind, wobei jeder Düse ein Düsenventil und ein Befüllungsventil zugeordnet sind und wobei zwischen jedem Düsenventil und jedem Befüllungsventil eine Düsenventilzuleitung in Form eines Schlauchs angeordnet ist,

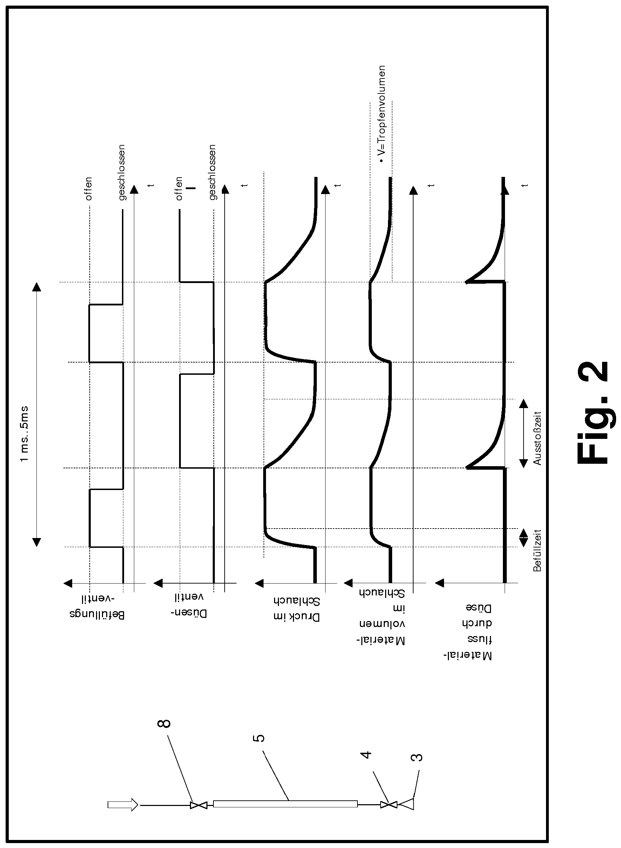

Fig. 2 von oben nach unten eine schematische Darstellung und Gegenüberstellung der zeitabhängigen Arbeitsweisen der Befüllungsventile und Düsenventile, wobei die damit einhergehenden zeitlichen Verläufe des Drucks und Beschichtungsmittelvorrats in einem Schlauch dargestellt sind und wobei der Beschichtungsmittelfluss oder Materialfluss durch eine Düse dargestellt ist,

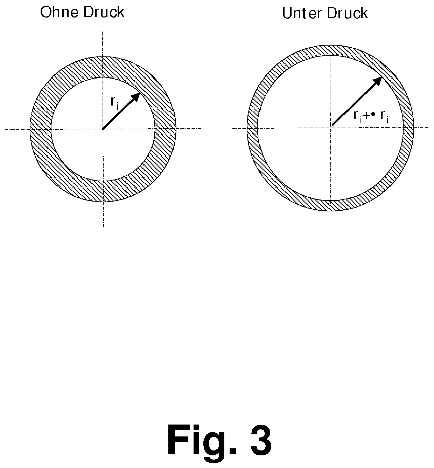

Fig. 3 auf der linken Seite eine Querschnittsansicht eines Schlauchs, dessen Inneres im drucklosen und entspannten Zustand einen ersten Radius (Radius, innen) aufweist, und auf der rechten Seite eine Querschnittsansicht des Schlauchs, dessen Inneres im druckbelasteten und gespannten Zustand einen zweiten Radius (vergrößerter Radius, innen) aufweist,

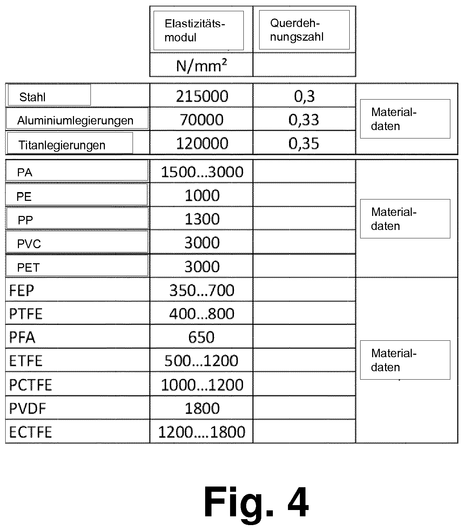

Fig. 4 eine Tabelle, in der Elastizitätsmodule und Querdehnungszahlen verschiedener Materialien aufgelistet sind, aus denen ein hier beschriebener Schlauch gefertigt sein kann,

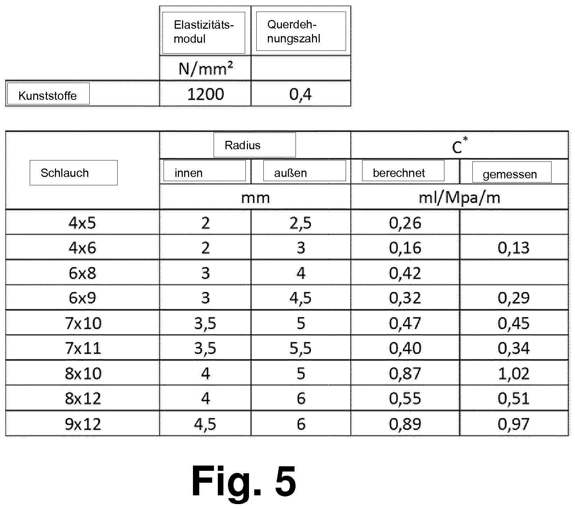

Fig. 5 Tabellen, in welchen der Elastizitätsmodul und die Querdehnungszahl eines Kunststoffs aufgelistet sind, wobei Schlauchformfaktoren verschiedener Schläuche mit unterschiedlichen Radien innen und außen berechnet und gemessen sind,

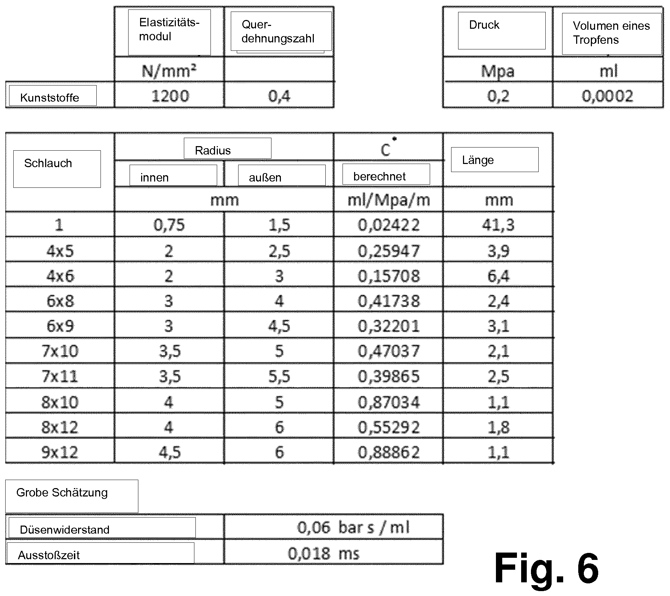

Fig. 6 Tabellen, in welchen der Elastizitätsmodul und die Querdehnungszahl eines Kunststoffs aufgelistet sind, wobei Schlauchformfaktoren verschiedener Schläuche mit unterschiedlichen Radien innen und außen berechnet sind, wobei anhand einer groben Schätzung ein Düsenwiderstand und eine Ausstoßzeit für das Beschichtungsmittel angegeben sind und wobei ein Druck und ein Volumen eines einzigen Tropfens des Beschichtungsmittels angegeben sind, und

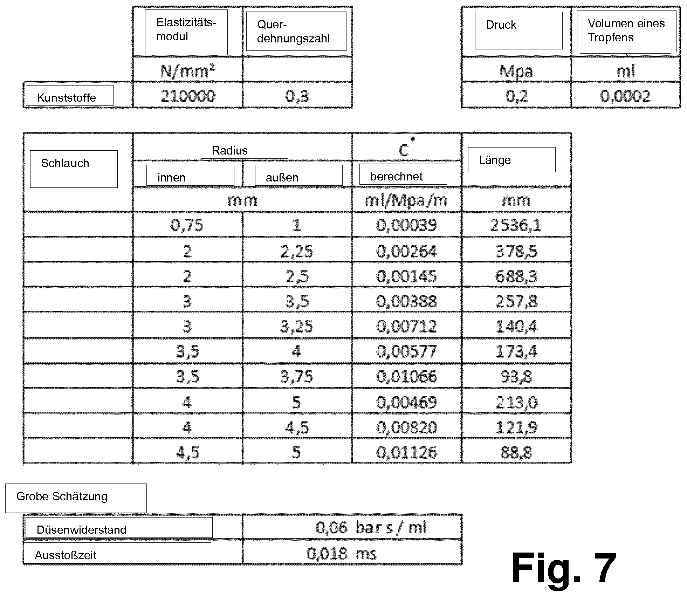

Fig. 7 Tabellen, in welchen der Elastizitätsmodul und die Querdehnungszahl eines Kunststoffs aufgelistet sind, wobei Schlauchformfaktoren verschiedener Schläuche mit unterschiedlichen Radien innen und außen berechnet sind, wobei anhand einer groben Schätzung ein Düsenwiderstand und eine Ausstoßzeit für das Beschichtungsmittel angegeben sind und wobei ein Druck und ein Volumen eines einzigen Tropfens des Beschichtungsmittels angegeben sind.

Fig. 1 zeigt ein Applikationsgerät 1 zum Beschichten von Bauteilen mit einem Beschichtungsmittel.

Das Applikationsgerät 1 umfasst einen Druckkopf 2 mit mehreren parallel angeordneten Düsen 3, aus denen das Beschichtungsmittel ausstoßbar ist, wobei an jeder einzelnen Düse 3 ein Düsenventil 4 angebracht ist, das eine Ventilöffnungszeit lang öffenbar ist, um das Beschichtungsmittel aus der jeweiligen Düse 3 auszustoßen.

Jedem Düsenventil 4 ist jeweils eine Düsenventilzuleitung 5 zugeordnet, welche an ihrer Auslassöffnung 6 das Beschichtungsmittel dem jeweiligen Düsenventil 4 zuführt.

Jede Düsenventilzuleitung 5 weist eine Einlassöffnung 7 auf, welche derart verschließbar oder absperrbar ist, dass innerhalb der Düsenventilzuleitung 5 eine definiert dosierte Menge oder ein definiert dosiertes Volumen eines Beschichtungsmittels abgeschlossen aufnehmbar bzw. aufgenommen ist.

Das aufgenommene definiert dosierte Volumen steht unter einem Druck, der den Umgebungsdruck oder Atmosphärendruck übersteigt.

Das Beschichtungsmittel innerhalb der Düsenventilzuleitung 5 steht insoweit unter einem Druck, welcher das Volumen des nicht unter Druck oder Umgebungsdruck stehenden Inneren der Düsenventilzuleitung 5 um ein Ausdehnungsvolumen vergrößert.

Das Beschichtungsmittel ist durch Öffnen des Düsenventils 4 unter Druckabbau durch eine Düse 3 ausstoßbar, wobei das ausgestoßene Volumen des Beschichtungsmittels dem Ausdehnungsvolumen entspricht.

Das Düsenventil 4 wird während einer Ventilöffnungszeit geöffnet, die größer als die Ausstoßzeit des Beschichtungsmittels ist. Die Ausstoßzeit wird benötigt, um den Druck im Inneren der Düsenventilzuleitung 5 auf Umgebungsdruck bzw. Atmosphärendruck abzubauen und das Ausdehnungsvolumen an Beschichtungsmittel auszustoßen.

Der Einlassöffnung 7 ist ein Befüllungsventil 8 zugeordnet, welches im geöffneten Zustand ein Eindringen von Beschichtungsmittel in die Düsenventilzuleitung 5 ermöglicht und im geschlossenen Zustand ein Eindringen von Beschichtungsmittel in die Düsenventilzuleitung 5 unterbindet.

Die Düsenventilzuleitung 5 ist elastisch und reversibel verformbar ausgestaltet. Die Düsenventilzuleitung 5 ist als Schlauch ausgebildet. Die Düsenventilzuleitung 5 ist konkret als Schlauch aus einem Kunststoff ausgebildet.

Der Druckkopf 2 ist mit einer zentralen Beschichtungsmittelzuleitung 9 verbunden, welche mit allen Befüllungsventilen 8 gemeinsam fluidleitend verbunden oder verbindbar ist. Die zentrale Beschichtungsmittelzuleitung 9 ist mit einer Druckregulierungseinheit 10 verbunden. Die Druckregulierungseinheit 10 ist mit einer Luftdruckkontrolleinheit 11 verbunden.

Das Applikationsgerät 1 kann an einem nicht gezeigten Roboter aufgenommen sein. Konkret könnte der Roboter einen um mehrere Achsen schwenkbaren und beweglichen Roboterarm aufweisen, wobei das Applikationsgerät am Tool Center Point des Roboterarms aufgenommen ist.

Fig. 2 zeigt die Funktionsweise des Applikationsgeräts 1 anhand verschiedener zeitlicher Verläufe. Das oberste Diagramm zeigt, dass ein Befüllungsventil 8 während eines Zeitintervalls von etwa 5 Millisekunden (ms) zweimal geöffnet und geschlossen wird. Das zugehörige Düsenventil 4 wird im selben Zeitintervall einmal geöffnet, wenn nämlich das zugehörige in Reihe geschaltete Befüllungsventil 8 geschlossen ist und vor dem Öffnen des Düsenventils 4 eine definiert dosierte Menge bzw. ein definiert dosiertes Volumen an Beschichtungsmittel in der Düsenventilzuleitung 5 abgeschlossen und unter Druck stehend aufgenommen ist.

Das in Fig. 2 von oben betrachtet dritte Diagramm zeigt, dass im Inneren der Düsenventilzuleitung 5 eine Erhöhung des Drucks erfolgt, wenn das Düsenventil 4 geschlossen ist und das Befüllungsventil 8 geöffnet wird. Der Druck innerhalb der Düsenventilzuleitung 5 steigt auf einen Wert an, der durch die Druckregulierungseinheit 10 vorgegeben wird. Die als Schlauch ausgebildete Düsenventilzuleitung 5 wird durch den Druck ausgedehnt. Das Volumen des nicht unter Druck stehenden Schlauchs wird um ein Ausdehnungsvolumen vergrößert.

Das Ausdehnungsvolumen und damit das unter Druck zusätzlich aufnehmbare Volumen an Beschichtungsmittel innerhalb des Schlauchs hängen vom vorgegebenen Druck der Druckregulierungseinheit 10 und von Eigenschaften des Schlauchs ab.

Die Befüllzeit hängt von der Auslegung der Ventile, insbesondere von deren Widerstand, und der Viskosität des Beschichtungsmittels ab. Daher sollte die Befüllzeit ausreichend lang sein, um verschiedenen Viskositäten Rechnung zu tragen.

Ein Befüllungsventil 8 schließt nach der gewünschten Befüllung der Düsenventilzuleitung 5, inklusive der Befüllung von Randbereichen. Für eine relativ kurze Zeit sind beide Ventile 4, 8 geschlossen.

Wenn das Düsenventil 4 dann geöffnet wird, entweicht das Beschichtungsmittel über die Düse 3 solange, bis der Druck in der Düsenventilzuleitung 5 gleich dem Umgebungsdruck oder Atmosphärendruck ist. Die dosierte Abgabe des Beschichtungsmittels erfolgt quasi druck- oder kraftgesteuert.

Fig. 2 kann entnommen werden, dass die Ausstoßzeit kürzer ist als die Ventilöffnungszeit, während der das Düsenventil 4 geöffnet ist. Die Ausstoßzeit hängt von der Auslegung des jeweiligen Düsenventils 4 und der Viskosität des Beschichtungsmittels ab. Das Ausdehnungsvolumen an Beschichtungsmittel oder Lack, das durch die Düse 3 entweicht, hängt nicht von der Viskosität des Beschichtungsmittels oder des Lacks ab. Daher haben Verschmutzungen oder Verschleißeffekte sowie Unterschiede oder Schwankungen der Viskosität keinen oder nahezu keinen Einfluss auf das Tropfenvolumen oder Tröpfchenvolumen.

Anhand von Fig. 3 und den nachfolgenden Formeln kann das aus einer Düse 3 entweichende Ausdehnungsvolumen an Beschichtungsmittel ermittelt werden.

Die nachfolgende Formel gibt an, wie die Vergrößerung des inneren Radius eines Schlauchs ermittelt werden kann:

$$\Delta r_i = \frac{p_i}{E} \cdot \frac{r_i^3}{r_a^2 - r_i^2} \cdot \left[ (1+\nu)\frac{r_a^2}{r_i^2} + 1 - \nu \right]$$

In der Formel sind

$\nu$     die Querdehnungszahl (Querkontraktionszahl oder Poissonzahl),

E     der Elastizitätsmodul,

$r_i$     der Radius innen,

$r_a$      der Radius außen,

$\Delta r_i$      die Vergrößerung des Radius innen durch Erhöhung des Drucks

$p_i$      der Druck auf die innere Oberfläche der Düsenventilzuleitung 5,

$\Delta V$      das Ausdehnungsvolumen durch Druckerhöhung und

$C^*$      ein Schlauchformfaktor bei geringem Druck.

Anhand der nachfolgenden Formeln kann das Ausdehnungsvolumen, nämlich die Vergrößerung des Volumens gegenüber einem nicht unter Druck stehenden Schlauch, und damit die zusätzlich aufnehmbare Menge an Beschichtungsmittel innerhalb des Schlauchs ermittelt werden. Des Weiteren kann der Schlauchformfaktor ermittelt werden.

$$\Delta V = \pi \cdot l \cdot \left[ \left[ r_i + \frac{p_i}{E} \cdot \frac{r_i^3}{r_a^2 - r_i^2} \cdot \left[ (1+\nu)\frac{r_a^2}{r_i^2} + 1 - \nu \right] \right]^2 - r_i^2 \right]$$

$$for \quad 100 \cdot p_i < E$$

$$\Delta V = 2\pi \cdot l \cdot r_i^2 \cdot \frac{p_i}{E} \cdot \frac{(1+\nu)r_a^2 + (1-\nu)r_i^2}{r_a^2 - r_i^2}$$

$$C^* = \frac{\Delta V}{p_i \cdot l} = 2\pi \cdot \frac{r_i^2}{E} \cdot \frac{(1+\nu) \cdot r_a^2 + (1-\nu) \cdot r_i^2}{r_a^2 - r_i^2}$$

In den Figuren 4 bis 7 sind Tabellen angegeben, die Materialdaten und rechnerisch oder experimentell ermittelte Daten auflisten.

<div align="center">Bezugszeichenliste</div>

| 1 | Applikationsgerät |
|---|---|
| 2 | Druckkopf |
| 3 | Düse |
| 4 | Düsenventil |
| 5 | Düsenventilzuleitung |
| 6 | Auslassöffnung |
| 7 | Einlassöffnung |
| 8 | Befüllungsventil |
| 9 | Zentrale Beschichtungsmittelzuleitung |
| 10 | Druckregulierungseinheit |
| 11 | Luftdruckkontrolleinheit |

**Patentansprüche**

1. Applikationsgerät (1) zum Beschichten von Bauteilen mit einem Beschichtungsmittel, umfassend einen Druckkopf (2) mit mehreren Düsen (3), aus denen das Beschichtungsmittel ausstoßbar ist, wobei an jeder einzelnen Düse (3) ein Düsenventil (4) angebracht ist, das eine Ventilöffnungszeit lang öffenbar ist, um das Beschichtungsmittel aus der jeweiligen Düse (3) auszustoßen, wobei jedem Düsenventil (4) jeweils eine Düsenventilzuleitung (5) zugeordnet ist, welche an ihrer Auslassöffnung (6) das Beschichtungsmittel dem jeweiligen Düsenventil (4) zuführt, und wobei jede Düsenventilzuleitung (5) eine Einlassöffnung (7) aufweist, weiche derart verschließbar oder absperrbar ist, dass innerhalb der Düsenventilzuleitung (5) eine definiert dosierte Menge oder ein definiert dosiertes Volumen eines Beschichtungsmittels abgeschlossen aufnehmbar ist, **dadurch gekennzeichnet, dass** die Düsenventilzuleitung (5) elastisch und/ oder reversibel verformbar ausgestaltet ist,

2. Applikationsgerät nach Anspruch 1, **dadurch gekennzeichnet, dass** das Beschichtungsmittel innerhalb der Düsenventilzuleitung (5) unter einem Druck steht, welcher das Volumen des nicht unter Druck oder Umgebungsdruck stehenden Inneren der Düsenventilzuleitung (5) um ein Ausdehnungsvolumen vergrößert, wobei das Beschichtungsmittel durch Öffnen des Düsenventils (4) unter Druckabbau durch eine Düse (3) ausstoßbar ist und wobei das ausgestoßene Volumen des Beschichtungsmittels dem Ausdehnungsvolumen entspricht.

3. Applikationsgerät nach Anspruch 2, **dadurch gekennzeichnet, dass** das Düsenventil (4) während einer Ventilöffnungszeit öffenbar ist, die größer als die Ausstoßzeit des Beschichtungsmittels ist, die benötigt wird, um den Druck im Inneren der Düsenventilzuleitung (5) auf Umgebungsdruck abzubauen und das Ausdehnungsvolumen an Beschichtungsmittel auszustoßen.

4. Applikationsgerät nach einem der voranstehenden Ansprüche, **dadurch gekennzeichnet, dass** der Einlassöffnung (7) ein Befüllungsventil (8) zugeordnet ist, welches im geöffneten Zustand ein Eindringen von Beschichtungsmittel in die Düsenventilzuleitung (5) ermöglicht und im geschlossenen Zustand ein Eindringen von Beschichtungsmittel in die Düsenventilzuleitung (5) unterbindet.

5. Applikationsgerät nach einem der voranstehenden Ansprüche, **dadurch gekennzeichnet, dass** die Düsenventilzuleitung (5) als Schlauch oder Rohr ausgebildet ist.

6. Applikationsgerät nach einem der voranstehenden Ansprüche, **dadurch gekennzeichnet, dass** die Düsenventilzuleitung (5) als Schlauch oder Rohr aus einem Kunststoff ausgebildet ist.

7. Applikationsgerät nach einem der voranstehenden Ansprüche, **dadurch gekennzeichnet, dass** der Druckkopf (2) mit einer zentralen Beschichtungsmittelzuleitung (9) verbunden ist, welche mit allen Befüllungsventilen (8) gemeinsam fluidleitend verbunden oder verbindbar ist.

8. Applikationsgerät nach Anspruch 7, **dadurch gekennzeichnet, dass** die zentrale Beschichtungsmittelzuleitung (9) mit einer Druckregulierungseinheit (10) verbunden ist.

9. Applikationsgerät nach Anspruch 8, **dadurch gekennzeichnet, dass** die Druckregulierungseinheit (10) mit einer Luftdruckkontrolleinheit (11) verbunden ist.

10. Anordnung, umfassend ein Applikationsgerät (1) nach einem der voranstehenden Ansprüche und einen Roboter, an welchem das Applikationsgerät (1) aufgenommen ist.

11. Anordnung nach Anspruch 10, **dadurch gekennzeichnet, dass** der Roboter einen um mehrere Achsen schwenkbaren und/ oder beweglichen Roboterarm aufweist und/ oder dass das Applikationsgerät (1) am Tool Center Point des Roboterarms des Roboters aufgenommen ist.

**Claims**

1. Application device (1) for coating components with a coating agent, comprising a printhead (2) with multiple nozzles (3) from which the coating agent is able to be discharged, wherein a nozzle valve (4) is attached to each individual nozzle (3) and is able to be opened for a valve opening period in order for the coating agent to be discharged from the respective nozzle (3), wherein each nozzle valve (4) is assigned in each case one nozzle valve supply line (5) which, at its outlet opening (6), supplies the coating agent to the respective nozzle valve (4), and wherein each nozzle valve supply line (5) has an inlet opening (7) which is able to be shut off or closed off in such a way that, within the nozzle valve supply line (5), a definedly dosed quantity or a definedly dosed volume of a coating agent is able to be received in a closed-off manner,

**characterized in that**

the nozzle valve supply line (5) is of elastic and/or reversibly deformable design.

2. Application device according to Claim 1, **characterized in that**, within the nozzle valve supply line (5), the coating agent is at a pressure which increases the volume of the interior of the nozzle valve supply line (5) in a state not pressurized or at ambient pressure by an expansion volume, wherein the coating agent is able to be discharged through a nozzle (3), with reduction in pressure, by opening of the nozzle valve (4), and wherein the discharged volume of the coating agent corresponds to the expansion volume.

3. Application device according to Claim 2, **characterized in that** the nozzle valve (4) is able to be opened during a valve opening period which is longer than the discharge period of the coating agent that is required to reduce the pressure in the interior of the nozzle valve supply line (5) to ambient pressure and to discharge the expansion volume of coating agent.

4. Application device according to one of the preceding claims, **characterized in that** the inlet opening (7) is assigned a filling valve (8) which, in the open state, allows coating agent to enter the nozzle valve supply line (5) and which, in the closed state, prevents coating agent from entering the nozzle valve supply line (5).

5. Application device according to one of the preceding claims, **characterized in that** the nozzle valve supply line (5) is in the form of a hose or tube.

6. Application device according to one of the preceding claims, **characterized in that** the nozzle valve supply line (5) is in the form of a hose or tube composed of a plastic.

7. Application device according to one of the preceding claims, **characterized in that** the printhead (2) is connected to a central coating agent supply line (9) which is or is able to be connected in a fluid-conducting manner to all the filling valves (8) together.

8. Application device according to Claim 7, **characterized in that** the central coating agent supply line (9) is connected to a pressure regulation unit (10).

9. Application device according to Claim 8, **characterized in that** the pressure regulation unit (10) is connected to an air-pressure control unit (11).

10. Arrangement, comprising an application device (1) according to one of the preceding claims and a robot on which the application device (1) is received.

11. Arrangement according to Claim 10, **characterized in that** the robot has a robot arm which is movable and/or pivotable about multiple axes, and/or **in that** the application device (1) is received at the tool centre point of the robot arm of the robot.

**Revendications**

1. Dispositif d'application (1) destiné à revêtir des composants avec un agent de revêtement, ledit dispositif comprenant une tête d'impression (2) pourvue d'une pluralité de buses (3), desquelles l'agent de revêtement peut être éjecté, une soupape de buse (4) étant fixée à chaque buse individuelle (3) et étant ouverte pendant un temps d'ouverture de soupape afin d'éjecter l'agent de revêtement de la buse respective (3), chaque soupape de buse (4) étant associée à une conduite d'alimentation de soupape de buse (5) qui alimente la soupape de buse (4) en agent de revêtement au niveau de son ouverture de sortie (6), et chaque conduite d'alimentation de soupape de buse (5) comportant une ouverture d'entrée (7) qui peut être fermée ou obturée de manière qu'une quantité dosée définie ou un volume dosé défini d'un agent de revêtement puisse être reçu(e) dans la conduite d'alimentation de soupape de buse (5),

**caractérisé en ce que**

la conduite d'alimentation de soupape de buse (5) est conçue pour être déformable élastiquement et/ou de manière réversible.

2. Dispositif d'application selon la revendication 1, **caractérisé en ce que** l'agent de revêtement situé à l'intérieur de la conduite d'alimentation de soupape de buse (5) est à une pression qui augmente d'un volume d'expansion le volume à l'intérieur de la conduite d'alimentation de soupape de buse (5) qui n'est pas sous pression ou qui est à la pression ambiante, l'agent de revêtement pouvant être éjecté sous pression réduite à travers une buse (3) par ouverture de la soupape de buse (4), et le volume éjecté de l'agent de revêtement correspondant au volume d'expansion.

3. Dispositif d'application selon la revendication 2, **caractérisé en ce que** la soupape de buse (4) peut être ouverte pendant un temps d'ouverture de soupape qui est supérieur au temps d'éjection de l'agent de revêtement qui est nécessaire pour réduire la pression à l'intérieur de la conduite d'alimentation de soupape de buse (5) à la pression ambiante et pour éjecter le volume d'expansion d'agent de revêtement.

4. Dispositif d'application selon l'une des revendications précédentes, **caractérisé en ce que** l'ouverture d'entrée (7) est associée à une soupape de remplissage (8) qui, lorsqu'elle est ouverte, permet à l'agent de revêtement de pénétrer dans la conduite d'alimentation de soupape de buse (5) et qui, lorsqu'elle est fermée, empêche l'agent de revêtement de pénétrer dans la conduite d'alimentation de soupape de buse (5).

5. Dispositif d'application selon l'une des revendications précédentes, **caractérisé en ce que** la conduite d'alimentation de soupape de buse (5) est réalisée sous la forme d'un tuyau ou d'un tube.

6. Dispositif d'application selon l'une des revendications précédentes, **caractérisé en ce que** la conduite d'alimentation de soupape de buse (5) est réalisée sous la forme d'un tuyau ou d'un tube en matière synthétique.

7. Dispositif d'application selon l'une des revendications précédentes, **caractérisé en ce que** la tête d'impression (2) est reliée à une conduite centrale (9) d'alimentation en agent de revêtement, laquelle est reliée ou peut être reliée à toutes les soupapes de remplissage (8) par une liaison fluidique commune.

8. Dispositif d'application selon la revendication 7, **caractérisé en ce que** la conduite centrale (9) d'alimentation en agent de revêtement est reliée à une unité de régulation de pression (10).

9. Dispositif d'application selon la revendication 8, **caractérisé en ce que** l'unité de régulation de pression (10) est reliée à une unité de régulation de pression d'air (11).

10. Ensemble comprenant un dispositif d'application (1) selon l'une des revendications précédentes et un robot sur lequel le dispositif d'application (1) est reçu.

11. Ensemble selon la revendication 10, **caractérisé en ce que** le robot comporte un bras de robot qui peut être mobile et/ou pivotant sur plusieurs axes et/ou **en ce que** le dispositif d'application (1) est reçu au point central d'outil du bras du robot.

Fig. 1

Fig. 2

| | Elastizitäts-modul | Querdeh-nungszahl | |
|---|---|---|---|
| | N/mm² | | |
| Stahl | 215000 | 0,3 | Material-daten |
| Aluminiumlegierungen | 70000 | 0,33 | |
| Titanlegierungen | 120000 | 0,35 | |
| PA | 1500...3000 | | Material-daten |
| PE | 1000 | | |
| PP | 1300 | | |
| PVC | 3000 | | |
| PET | 3000 | | |
| FEP | 350...700 | | Material-daten |
| PTFE | 400...800 | | |
| PFA | 650 | | |
| ETFE | 500...1200 | | |
| PCTFE | 1000...1200 | | |
| PVDF | 1800 | | |
| ECTFE | 1200....1800 | | |

# Fig. 4

EP 3 621 746 B1

| | Elastizitäts-modul | Querdeh-nungszahl |
|---|---|---|
| | N/mm² | |
| Kunststoffe | 1200 | 0,4 |

| Schlauch | Radius | | $C^*$ | |
|---|---|---|---|---|
| | innen | außen | berechnet | gemessen |
| | mm | | ml/Mpa/m | |
| 4x5 | 2 | 2,5 | 0,26 | |
| 4x6 | 2 | 3 | 0,16 | 0,13 |
| 6x8 | 3 | 4 | 0,42 | |
| 6x9 | 3 | 4,5 | 0,32 | 0,29 |
| 7x10 | 3,5 | 5 | 0,47 | 0,45 |
| 7x11 | 3,5 | 5,5 | 0,40 | 0,34 |
| 8x10 | 4 | 5 | 0,87 | 1,02 |
| 8x12 | 4 | 6 | 0,55 | 0,51 |
| 9x12 | 4,5 | 6 | 0,89 | 0,97 |

# Fig. 5

|  | Elastizitäts-modul | Quer-dehnungszahl |
|---|---|---|
|  | N/mm² |  |
| Kunststoffe | 1200 | 0,4 |

| Druck | Volumen eines Tropfens |
|---|---|
| Mpa | ml |
| 0,2 | 0,0002 |

| Schlauch | Radius | | $C^*$ | Länge |
|---|---|---|---|---|
|  | innen | außen | berechnet |  |
|  | mm | | ml/Mpa/m | mm |
| 1 | 0,75 | 1,5 | 0,02422 | 41,3 |
| 4x5 | 2 | 2,5 | 0,25947 | 3,9 |
| 4x6 | 2 | 3 | 0,15708 | 6,4 |
| 6x8 | 3 | 4 | 0,41738 | 2,4 |
| 6x9 | 3 | 4,5 | 0,32201 | 3,1 |
| 7x10 | 3,5 | 5 | 0,47037 | 2,1 |
| 7x11 | 3,5 | 5,5 | 0,39865 | 2,5 |
| 8x10 | 4 | 5 | 0,87034 | 1,1 |
| 8x12 | 4 | 6 | 0,55292 | 1,8 |
| 9x12 | 4,5 | 6 | 0,88862 | 1,1 |

| Grobe Schätzung | |
|---|---|
| Düsenwiderstand | 0,06 bar s / ml |
| Ausstoßzeit | 0,018 ms |

# Fig. 6

| | Elastizitäts-modul | Quer-dehnungszahl |
|---|---|---|
| | N/mm² | |
| Kunststoffe | 210000 | 0,3 |

| Druck | Volumen eines Tropfens |
|---|---|
| Mpa | ml |
| 0,2 | 0,0002 |

| Schlauch | Radius | | $C^*$ | Länge |
|---|---|---|---|---|
| | innen | außen | berechnet | |
| | mm | | ml/Mpa/m | mm |
| | 0,75 | 1 | 0,00039 | 2536,1 |
| | 2 | 2,25 | 0,00264 | 378,5 |
| | 2 | 2,5 | 0,00145 | 688,3 |
| | 3 | 3,5 | 0,00388 | 257,8 |
| | 3 | 3,25 | 0,00712 | 140,4 |
| | 3,5 | 4 | 0,00577 | 173,4 |
| | 3,5 | 3,75 | 0,01066 | 93,8 |
| | 4 | 5 | 0,00469 | 213,0 |
| | 4 | 4,5 | 0,00820 | 121,9 |
| | 4,5 | 5 | 0,01126 | 88,8 |

Grobe Schätzung

| Düsenwiderstand | 0,06 bar s / ml |
|---|---|
| Ausstoßzeit | 0,018 ms |

## Fig. 7

**IN DER BESCHREIBUNG AUFGEFÜHRTE DOKUMENTE**

**In der Beschreibung aufgeführte Patentdokumente**

- WO 2010107445 A1
- US 5741554 A
- DE 102017101937